# FASCICULE DE BREVET EUROPEEN

(11) **EP 1 584 233 B1**
(45) Date de publication et mention de la délivrance du brevet: **11.03.2009**
(21) Numéro de dépôt: 05290035.4
(22) Date de dépôt: 06.01.2005
(51) Int. Cl.: A01K 97/12

(54) **Détecteur de touche**
Bissanzeiger
Fish bite indicator

(30) Priorité: 25.02.2004 FR 0401875
(43) Date de publication de la demande: 12.10.2005
(73) Titulaire: SENSAS, 28630 Fontenay sur Eure (FR)
(72) Inventeur: Lebreton, Jean-Marc, 28600 Luisant (FR)
(74) Mandataire: Laget, Jean-Loup

(56) Documents cités:
- EP-A- 0 749 687
- EP-A- 1 059 029
- EP-A- 1 236 395
- FR-A- 2 742 967

## Description

L'invention concerne un détecteur de touche pour pêche à la ligne.

Les pêcheurs à la ligne, et notamment les pêcheurs de carpes, utilisent des supports pour placer plusieurs cannes en attente. En général, ces supports sont prévus pour 4 cannes. Pour chacune des cannes, il est usuel de disposer un détecteur de touche, c'est-à-dire un boîtier avec des bras pour tenir la canne et une fente dans laquelle passe le fil. Le fil, lorsqu'il est entraîné par le poisson à l'occasion d'une touche, entraîne en rotation une roue portant des aimants permanents, en général 2 ou 4. La rotation des aimants provoque la création d'un courant induit dans un circuit. Ce courant est utilisé pour émettre d'une part un signal sonore et d'autre part un signal lumineux par l'intermédiaire d'une diode électroluminescente. Pour distinguer la canne objet de la touche il est connu d'équiper le boîtier d'un voyant lumineux d'identification constitué d'une diode de couleur. Usuellement, les couleurs des diodes sont : bleue, verte, rouge et jaune. Ainsi, le pêcheur qui utilise 4 cannes sur son support prévoit un boîtier à diode bleue , un boîtier à diode verte, un boîtier à diode rouge et un boîtier à diode jaune. Ce principe est satisfaisant pour le pêcheur, mais présente un inconvénient pour le fabricant et le détaillant. Le fabricant doit prévoir des lignes de fabrication avec des diodes de couleurs différentes. Le détaillant doit avoir quatre stocks de boîtiers, chacun avec des diodes d'une couleur déterminée.

Un premier but de l'invention est d'éviter cet inconvénient en permettant de réduire les frais de fabrication et de stocks.

Par ailleurs, certains détecteurs de touche utilisent la détection d'une touche pour commander l'émission d'un signal radioélectrique susceptible d'être reçu dans un rayon de l'ordre d'une centaine de mètres par un récepteur, accordé sur la fréquence du signal émis, et qui, à son tour, délivre un signal d'avertissement. Usuellement, un boîtier équipé d'une diode émet un signal de fréquence définie correspondant à la couleur de la diode.

Ainsi, les chaînes de fabrication des boîtiers émetteurs sont spécifiquement dédiées à une couleur et à la fréquence correspondante. Si un pêcheur n'a que des boîtiers à même couleur de diode, son récepteur n'émet qu'un même signal d'avertissement.

Un autre but de l'invention est de permettre au pêcheur de choisir la fréquence du signal émis par chaque émetteur dans une gamme de fréquences reçues par le récepteur, ledit récepteur délivrant un signal d'avertissement correspondant à la fréquence du signal émis.

L'invention a pour objet un détecteur de touche pour pêche à la ligne, constitué de plusieurs boîtiers émetteurs et d'un récepteur, chaque boîtier émetteur portant un voyant lumineux et le récepteur portant plusieurs voyants lumineux, les voyants lumineux des boîtiers émetteurs et du récepteur étant constitués chacun d'une diode électroluminescente et d'un capot translucide, chaque boîtier émetteur émettant, en cas de touche, un signal radioélectrique reçu par le récepteur, caractérisé en ce que
- le récepteur a plusieurs fréquences préréglées pour la réception des signaux radioélectriques des boîtiers émetteurs et pour l'identification des boîtiers émetteurs, et
- chaque boîtier émetteur comporte des moyens de choix d'une fréquence d'émission, parmi les fréquences préréglées du récepteur.

Selon d'autres caractéristiques :
- l'identification des boîtiers émetteurs est assurée par l'intermédiaire des voyants lumineux du récepteur ;
- les voyants lumineux des boîtiers émetteurs sont constitués chacun d'une diode blanche et d'un capot de couleur, amovible et interchangeable.

L'invention a aussi pour objet un boîtier émetteur pour détecteur de touche, portant un voyant lumineux d'identification, caractérisé en ce que le voyant lumineux est constitué d'une diode blanche et d'un capot de couleur, amovible et interchangeable.

D'autres caractéristiques ressortent de la description qui suit faite avec référence au dessin annexé dans lequel :
- la figure 1 représente un schéma simplifié d'un boîtier émetteur d'un détecteur de touche pour pêche à la ligne selon un exemple de réalisation de l'invention ;
- la figure 2 représente un schéma simplifié d'un récepteur susceptible de fonctionner avec quatre boîtiers émetteurs selon la figure 1.

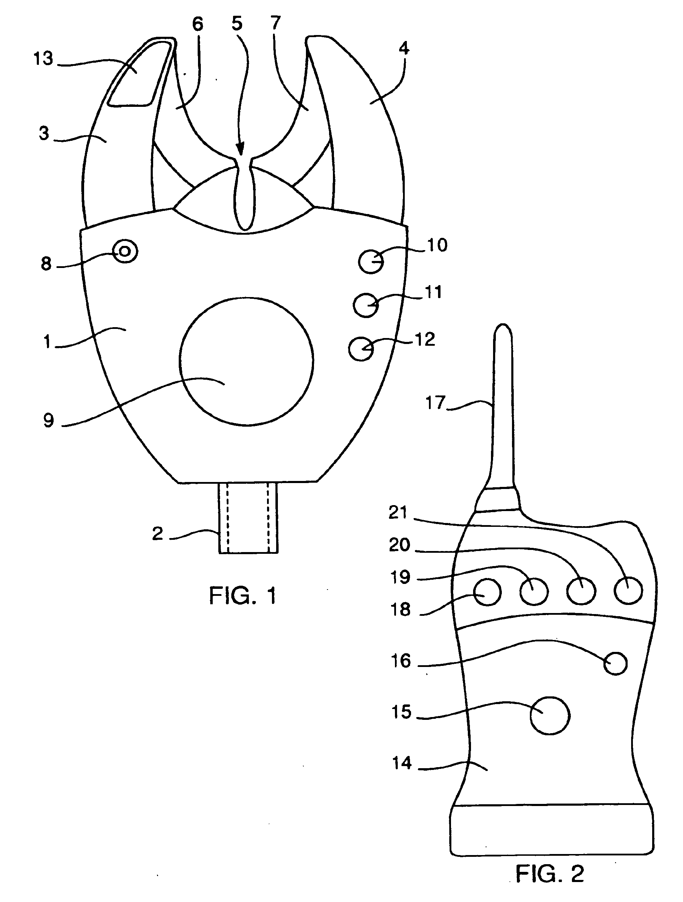

Le détecteur de touche selon l'invention se compose d'au moins un boîtier émetteur selon la figure 1 et d'un récepteur selon la figure 2. Le boîtier émetteur présente de façon classique un corps 1 muni à sa base d'une tige filetée 2 pour sa fixation sur un support grâce à un écrou moleté non représenté. A sa partie supérieure, le corps 1 porte deux bras 3 et 4 entre lesquels est placée la canne à pêche. Dans l'axe du boîtier est prévue une fente 5 dans laquelle passe le fil de pêche. Entre les bras 3 et 4, de part et d'autre de la fente 5, sont disposées deux parties antidérapantes 6, 7 pour assurer le maintien de la canne quelle que soit sa position. Sur la partie gauche du boîtier est prévu un bouton 8 de mise en fonctionnement et d'arrêt.

Au centre du boîtier est disposé un haut-parleur 9. Sur la partie droit du boîtier sont prévus des boîtiers de commande du volume (10) du signal sonore émis par le haut-parleur 9 du boîtier, de la tonalité (11) de ce signal et de test (12).

Au voisinage de l'extrémité du bras 3 est prévu un voyant lumineux constitué d'un capot translucide 13 sous lequel se trouve la diode dont l'éclairement signale la touche. Dans le boîtier est prévue une pile pour alimenter les circuits électroniques de contrôle, et une barrette à huit plots, susceptibles chacun d'occuper deux positions, au choix du pêcheur : 4 de ces plots sont utilisés pour l'identification de la position de l'émetteur sur le support, les 4 autres pour choisir la fréquence d'émission afin de personnaliser le code de transmission, notamment pour éviter les interférences avec les voisins éventuels.

Le récepteur de la figure 2 se compose d'un corps 14 muni d'un capot de protection articulé à la partie inférieure et pouvant, en position ouverte, servir de support au récepteur. Au centre est disposé un haut-parleur 15, et sur le côté un bouton 16 pour choisir la fonction sonore (haut-parleur 15) ou la fonction vibration (vibreur, non représenté).

A la partie supérieure, le corps 14 porte une antenne 17 de réception des signaux en provenance des boîtiers émetteurs. Le récepteur est prévu pour être couplé à 4 boîtiers émetteurs et il comporte 4 voyants lumineux 18, 19, 20, 21, munis chacun d'une diode électroluminescente non représentée et d'un capot translucide. Le récepteur a plusieurs fréquences préréglées pour la réception des signaux radioélectriques des boîtiers émetteurs et pour l'identification des boîtiers émetteurs sur le support. Les fréquences d'identification des boîtiers émetteurs correspondent chacune à un voyant lumineux du récepteur.

De préférence, la couleur du voyant lumineux du boîtier émetteur est coordonnée à celle du voyant correspondant du récepteur. Cette opération est rendue facile par le fait que les diodes sont à éclairage blanc et les capots translucides sont d'une part de couleur, d'autre part amovibles et interchangeables.

Ainsi, le fabricant n'a plus à fournir qu'un type de boîtier émetteur équipé d'une diode blanche , et quatre types de capots 13, chacun de l'une des 4 couleurs habituelles. De son côté, le détaillant n'a en stock qu'un type de boîtier émetteur, chaque boîtier étant accompagné de 4 capots de couleurs différentes. Enfin, le pêcheur s'approvisionne en boîtiers émetteurs identiques, et il fait lui-même ses choix de fréquences sur la barrette à plots de chaque boîtier émetteur.

De même, il choisit les capots translucides de la couleur qu'il désire, et il coordonne les couleurs entre les voyants lumineux du récepteur et ceux des boîtiers émetteurs en fonction de la position de ceux-ci.

L'exemple décrit correspond à 4 boîtiers émetteurs mais l'invention n'est pas limitée à ce nombre et couvre le cas de plusieurs boîtiers émetteurs, chaque boîtier émetteur comportant des moyens de choix de fréquence d'identification du boîtier émetteur, correspondant notamment à sa position sur un support, par exemple.

## Revendications

1. Détecteur de touche pour pêche à la ligne, constitué de plusieurs boîtiers émetteurs et d'un récepteur, chaque boîtier émetteur portant un voyant lumineux et le récepteur portant plusieurs voyants lumineux, les voyants lumineux des boîtiers émetteurs et du récepteur étant constitués chacun d'une diode électroluminescente et d'un capot translucide, chaque boîtier émetteur émettant, en cas de touche, un signal radioélectrique reçu par le récepteur, **caractérisé en ce que**
- le récepteur a plusieurs fréquences préréglées pour la réception des signaux radioélectriques des boîtiers émetteurs et pour l'identification des boîtiers émetteurs, et
- chaque boîtier émetteur comporte des moyens de choix d'une fréquence d'émission, parmi les fréquences préréglées du récepteur.

2. Détecteur de touche selon la revendication 1, **caractérisé en ce que** l'identification des boîtiers émetteurs est assurée par l'intermédiaire des voyants lumineux du récepteur.

3. Détecteur de touche selon la revendication 1, **caractérisé en ce que** les voyants lumineux des boîtiers émetteurs sont constitués chacun d'une diode blanche et d'un capot de couleur, amovible et interchangeable.

4. Boîtier émetteur pour détecteur de touche selon la revendication 1, portant un voyant lumineux d'identification, **caractérisé en ce que** le voyant lumineux est constitué d'une diode blanche et d'un capot de couleur, amovible et interchangeable.

## Claims

1. Touch sensor for angling, constituted by several transmitter devices and one receiver, each transmitter device bearing an indicator light and the receiver bearing several indicator lights, the indicator lights of the transmitter devices and the receiver each being constituted by a light-emitting diode and a translucent cap, each transmitter device transmitting, when touched, a radio signal received by the receiver,
**characterised in that**
- the receiver has several pre-set frequencies for receiving radio signals from the transmitter devices and for identifying the transmitter devices, and
- each transmitter device comprises means for choosing a transmitting frequency, from among the pre-set frequencies of the receiver.

2. Touch sensor according to claim 1, **characterised in that** the transmitter devices are identified by means of the indicator lights of the receiver.

3. Touch sensor according to claim 1, **characterised in that** the indicator lights of the transmitter devices are each constituted by a white diode and a coloured, removable and interchangeable cap.

4. Transmitter device for a touch sensor according to claim 1, bearing an identification indicator light, **characterised in that** the indicator light is constituted by a white diode and a coloured, removable and interchangeable cap.

## Patentansprüche

1. Bissanzeiger zum Angeln, der mehrere Sender und einen Empfänger umfasst, wobei jeder Sender eine Leuchtanzeige trägt und der Empfänger mehrere Leuchtanzeigen trägt, wobei die Leuchtanzeigen der Sender und des Empfängers jeweils eine Leuchtdiode und eine lichtdurchlässige Abdeckung umfassen, wobei jeder Sender bei einem Biss ein von dem Empfänger empfangenes Funksignal aussendet, **dadurch gekennzeichnet, dass** der Empfänger mehrere voreingestellte Frequenzen für den Empfang der Funksignale der Sender und für die Erkennung der Sender hat und dass jeder Sender Mittel zur Auswahl einer Sendefrequenz aus den voreingestellten Frequenzen des Empfängers umfasst.

2. Bissanzeiger nach Anspruch 1, **dadurch gekennzeichnet, dass** die Erkennung der Sender über die Leuchtanzeigen des Empfängers sichergestellt ist.

3. Bissanzeiger nach Anspruch 1, **dadurch gekennzeichnet, dass** die Leuchtanzeigen der Sender jeweils eine weiße Leuchtdiode und eine abnehmbare und austauschbare farbige Abdeckung umfassen.

4. Sender für Bissanzeiger nach Anspruch 1 mit einer Erkennungsleuchtanzeige, **dadurch gekennzeichnet, dass** die Leuchtanzeige eine weiße Leuchtdiode und eine abnehmbare und austauschbare farbige Abdeckung umfasst.
